## Europäisches Patentamt

## European Patent Office

## Office européen des brevets

(11) Publication number: **0 155 088**
**B1**

(12) **EUROPEAN PATENT SPECIFICATION**

(45) Date of publication of patent specification: **10.02.88**

(51) Int. Cl.⁴: **B 65 H 81/00**

(21) Application number: **85301006.4**

(22) Date of filing: **15.02.85**

(54) **Filament winding of articles of complex shape.**

(30) Priority: **25.02.84 GB 8404956**

(43) Date of publication of application:
**18.09.85 Bulletin 85/38**

(45) Publication of the grant of the patent:
**10.02.88 Bulletin 88/06**

(84) Designated Contracting States:
**BE CH DE FR GB IT LI NL SE**

(56) References cited:
**FR-A-1 144 154**
**US-A-3 666 589**
**US-A-3 775 207**
**US-A-4 350 549**

(73) Proprietor: **FORD MOTOR COMPANY LIMITED**
**Eagle Way**
**Brentwood Essex CM13 3BW (GB)**
(84) **BE CH GB IT LI NL SE**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Edwards, Kevin L.**
**16 Pinecroft Court Oakwood Park**
**Oakwood Derby DE2 2LL (GB)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

Filament winding is an established technique for producing essentially hollow, light-weight articles or components with a stiff, rigid skin. Components made by this technique are generally those which have a constant cross-section, such as pipes. Filaments, strands or tows impregnated or coated with thermosetting resin are wound tightly around a mandrel or former, and allowed to cure or set to form a hard skin. The technique has the ability to produce components of low weight and high rigidity. In order to achieve the desired low mass and low inertia in the finished article, the mandrel is often removed after the resin has set, to leave the article in its final, hollow condition.

For articles which have a regular shape, with an axis of symmetry, it is known to apply filament windings over a mandrel of the necessary shape. It is also known as in, for example, US—PS
3 666 589, to include in the mandrel moulded in mounting components centred on the axis of symmetry, which are subsequently locked in place by filament windings.

According to the invention, there is provided a method of manufacturing an article by using a filament winding technique, and where the article includes fittings mounted on its surface by which it can be detachably connected to other components, in which method a mandrel is formed on which filaments can be wound, the fittings are secured to the mandrel skin with the fittings projecting, and resin coated or impregnated filaments are wound onto the mandrel and over the fittings so that, when the resin has set, it secures the fittings in place, with the mandrel remaining part of the article after winding has been completed, characterized in that the article is of complex shape and has no single axis of symmetry and that the fittings, which are to be mounted at irregularly spaced positions on the surface of the article, have generally planar mounting plates secured to the mandrel skin, with the filaments being wound over the mounting plates to secure the fittings.

A problem with the production of complex shapes by filament winding techniques is that of removing the mandrel. It is possible to make the mandrel from a low melting point alloy, and then to melt the alloy so that it flows out. Disadvantages of this method are the consequent weight of the mandrel which then has considerable inertia resulting in difficulties in accelerating and decelerating the mandrel during the winding process, and the heat energy and labour involved in melting the alloy and in reforming it for a subsequent cycle. Such alloys also deteriorate over a number of cycles.

A variety of other mandrel constructions and removal methods are also known.

The use of a permanent mandrel can avoid these disadvantages. Additionally, mandrel removal costs are eliminated. Furthermore, with a suitable choice of mandrel material, the mandrel itself can contribute to the strength of the article and this in turn can mean that less filaments are required.

Filament winding allows placing and alignment of the filaments where they are needed to give the resulting structure the required strength. Because filaments are only put where they are needed, in the quantities needed, a component of minimum weight consistent with the strength requirements can be produced. In many cases it is also possible to produce a component of complex shape as a unitary structure, whereas the same component produced e.g. by metal stamping would require a number of component parts to be formed and then welded together.

The mandrel is preferably formed of a rigid, foamed plastics material such as a structural foam. The term "structural foam" refers to a body with a low density cellular core which has a solid integral skin. Many different materials can be used. Examples of suitable foams are polypropylene, polyethylene and polyurethane. Thermosetting foams are preferred to thermoplastic foams, particularly for larger sections because of the quicker setting or curing times.

Desirable properties for the mandrel are low cost, rigidity, light weight and a surface that is resistant to attack.

Low cost is necessary, as the cost of the mandrel material will have to be included in the cost of the finished article.

Rigidity is required for a number of reasons. Firstly, the mandrel must be capable of being handled before it is wound with filaments. Secondly, the mandrel must be able to withstand forces imposed on it during winding and forces imposed as a result of shrinkage of the filament wound structure during curing. These forces include compressive forces exerted by the filament tension, and also complex bending stresses imposed when winding a part of the article which is cantilevered from the mandrel support axis. Thirdly, since the mandrel remains as part of the article, it is advantageous if it can contribute to the strength of the article, mainly in resisting buckling of the otherwise hollow filament structure. Fourthly, if the mandrel rigidity and/or strength is sufficient, it may be possible to leave unstressed areas of the article unwound, with the mandrel itself providing the necessary strength in these areas and thus reducing cost and weight.

Light weight is required, as an important advantage of filament winding as a construction technique is its ability to produce a light-weight component. Since the mandrel remains in place, its weight has to be added to that of the filament structure in calculating the component weight.

Resistance to chemical attack is required because the mandrel must not be attacked by the resin used to wet the filaments wound onto it, save to the extent necessary to produce a bond between the resin and the mandrel. Furthermore, if lightly stressed areas of the article are to be left unwound, the mandrel material must have a sufficiently tough surface to avoid deterioration arising from external attack.

It is also desirable for the mandrel to have some degree of temperature resistance, at least sufficient to withstand temperatures which may exist during the winding process.

The mandrel may be reinforced, for example by adding reinforcing fibres into the mandrel material prior to foaming.

The mandrel can be formed by injection moulding, normally by reaction injection moulding (RIM) and metal inserts which are to form a constituent part of the article can be moulded in to the mandrel skin. Each insert may have a tapered peg attached to it, and the pegs can then be held in the material of the mandrel. The necessary windings can then be applied over the mandrel and over or around the insert. Metal fittings, such as brackets to be attached to the article surface, can be bolted onto threaded studs. These studs can be mounted on baseplates with tapered edges which are moulded into the mandrel skin. The filament windings will pass over the baseplate and around the studs, so that the studs will be held in the article surface. When the filament winding has been completed, the stud will then project from the finished component to receive a threaded fastener.

The mandrel can be made in a metal mould. When moulding a thermoplastic material such as polyethylene foam, two moulds can be used, to make the mandrel in two halves. The foam sections can thus be thin so that they cool in a reasonable time, and the halves can be secured together after moulding to make a hollow mandrel.

The invention extends to an article made by a filament winding technique as set out above.

The invention will now be further described, by way of example, with reference to the accompanying drawings, in which:

Figure 1 shows a structural foam mandrel in the form of a motor vehicle suspension wishbone, to be wound with filaments;

Figure 2 is a section through a vehicle suspension wishbone, taken on the line II—II from Figure 3;

Figure 3 shows the wishbone formed by winding on the mandrel of Figure 1;

Figure 4 shows the wishbone of Figure 3, with additional components attached;

Figures 5 and 6 are respectively elevation and plan views of a simplified representation of part of the wishbone;

Figure 7 is an end view of the wishbone flange where the wheel bearing will be fitted;

Figure 8 is a section on the line VIII—VIII from Figure 7;

Figures 9 and 10 are plan and elevation views, both partly in section, of the end of a wishbone arm; and

Figures 11 and 12 show a method of fixing an insert into a filament wound structure, Figure 11 being a section taken on the line XI—XI of Figure 12.

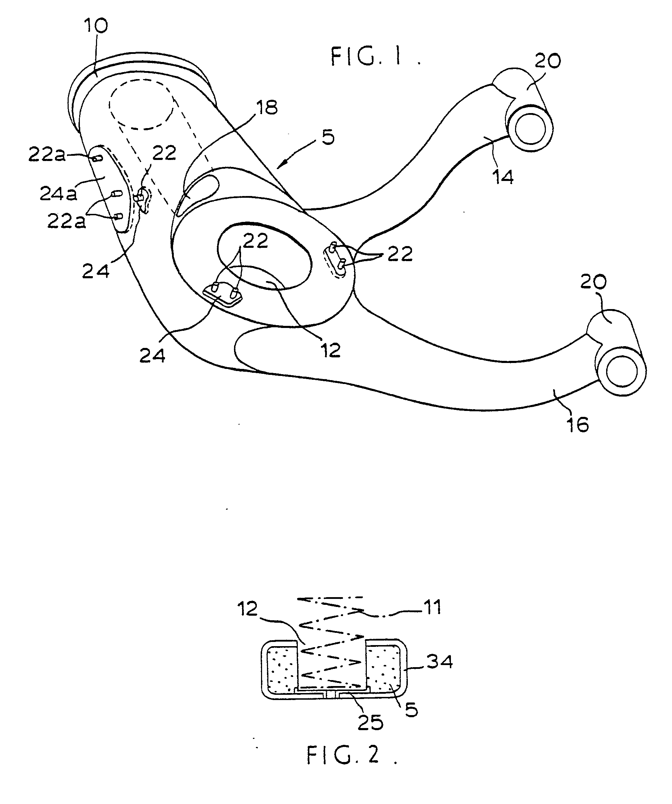

The mandrel 5 shown in Figure 1 is in a shape suitable for forming a suspension wishbone for a Ford Sierra car, and has a bearing flange 10, a spring well 12 and two wishbone arms 14 and 16. The limb extending from the spring well to the bearing flange has a passage 18 through it, for a drive shaft. The wishbone arms have pivot bushes 20 at their free ends. The flange 10 and the pivot bushes 20 are steel components anchored to the mandrel.

In use of the finished wishbone, the pivot bushes 20 will be pivoted on a sub frame of the vehicle. A spring 11 will have its lower end received in the spring well 12 (see Figure 2). A road wheel bearing will be attached to the bearing flange 10, and a drive shaft for the road wheel will pass through the passage 18. A shock absorber will have its lower end attached to the wishbone through a bracket which will be attached to a set of studs 22a on a stud plate 24a.

Studs 22 on other stud plates 24 are provided for receiving other wishbone fittings.

The mandrel is made by a moulding process. The process used will depend on the mandrel material. For a polyurethane foam mandrel, a reaction injection moulding process can be used. The mould can be made in two halves, with a side mould piece. For experimental purposes, the mould can be made from glass reinforced plastics. For production purposes, a metal mould would be used. Foam will be injected through a nozzle situated in the upper mould half. This upper mould half also forms the spring well and contains a removable core plus. This core plug forms the passage 18. The plug is supported at one end by the bearing flange and at the other end by the upper mould half.

As well as forming the cavity for the mandrel, the mould will also locate the inserts, i.e. the bearing flange 10, the pivot bushes 20 and the stud plates 24. The stud plates are held temporarily to the inside surface of the mould cavity by a weak adhesive prior to foaming.

After cure, the mould can be disassembled to reveal the mandrel illustrated in Figure 1.

Alternatively, a polyethylene foam mandrel can be produced. In this case, two moulds are used. Each mould will produce one half of a two part hollow shell mandrel. The two cured halves will then be snap fitted together to form a completed mandrel.

Because of the higher moulding pressures needed for polyethylene as compared with polyurethane, the mould will have to be made from aluminium or steel and firmly clamped in an injection or transfer moulding machine.

A metal dish 25 will be fitted at the bottom of the well 12 to provide a seat for the spring 11 and to prevent abrasion of the fibres by the spring.

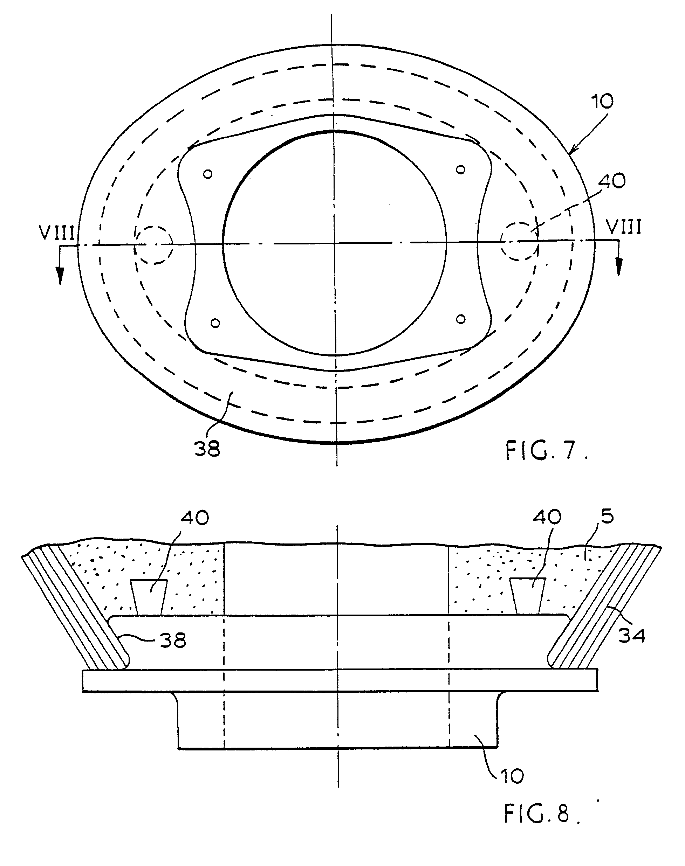

Figures 7 and 8 show the bearing flange 10 which has a tapered collar 38 at the rear. Tapered pegs 40 project from this collar and anchor the metal flange 10 in the foam mandrel 5. The filament wound skin 34 which is wound onto the mandrel covers the tapered collar 38 and, together with the pegs 40, holds the flange 10 in place.

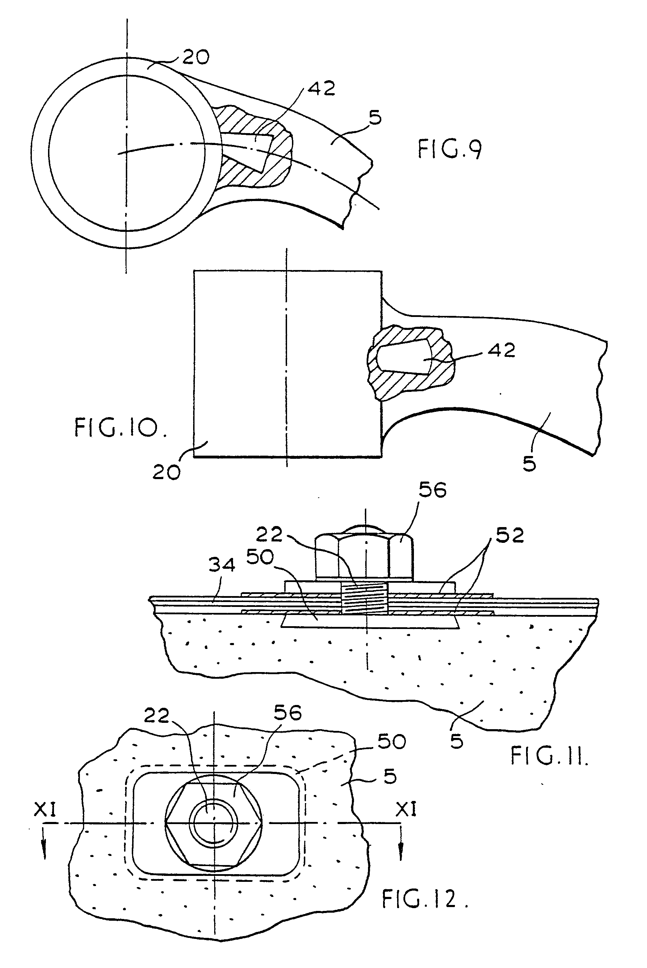

Figures 9 and 10 show the pivot bushes 20 and the mandrel 5 in the absence of any filament wound skin. Each bush 20 is formed with an integral peg 42 which is moulded in to the mandrel. These pegs serve to hold the bushes and the mandrel together before and during winding.

To form the filament wound surface of the component, filaments 27 such as glass fibres are wound around the mandrel 5. The fibres are coated or impregnated with a resin, which may be polyester or epoxy or vinyl ester resin, before application to the mandrel. Once the necessary number of windings have been applied, the structure is allowed to cure whereupon the resin sets and locks the strong filaments in place to produce an extremely strong component. This filament winding technology is well established.

It is necessary to apply the windings in a manner such that they do not slip over the mandrel surface after application. This is of particular importance when applying the process to large scale production of filament wound components, and reproducibility of winding patterns is then extremely important. To avoid any possibility of slippage, the filaments must be applied along geodesic or near geodesic paths on the mandrel surface. A geodesic path is the shortest distance between two points on a surface. For a complex shape, these paths are difficult to determine, but if the complex shape is approximated with regular shapes, the task is simplified. Geodesic paths are relatively easy to determine on a regular shape such as a cylinder or a cone.

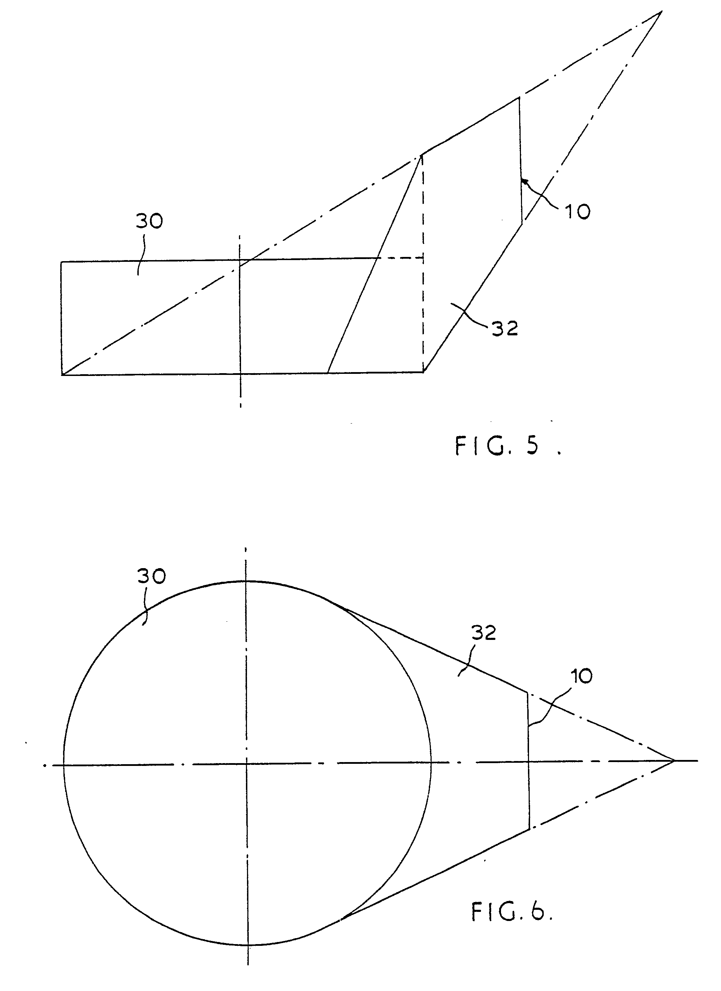

In the present case, the wishbone structure can be considered to consist of a cylindrical portion 30 (see Figures 5 and 6) forming the spring well and an oblique truncated conical portion 32 forming the limb supporting the bearing flange 10. The wishbone arms (which are not shown in Figures 5 and 6) can be considered as cylindrical shapes. These shapes interpenetrate each other as shown. The geodesic lines on these shapes, which each have a single axis of rotational symmetry, are easy to determine.

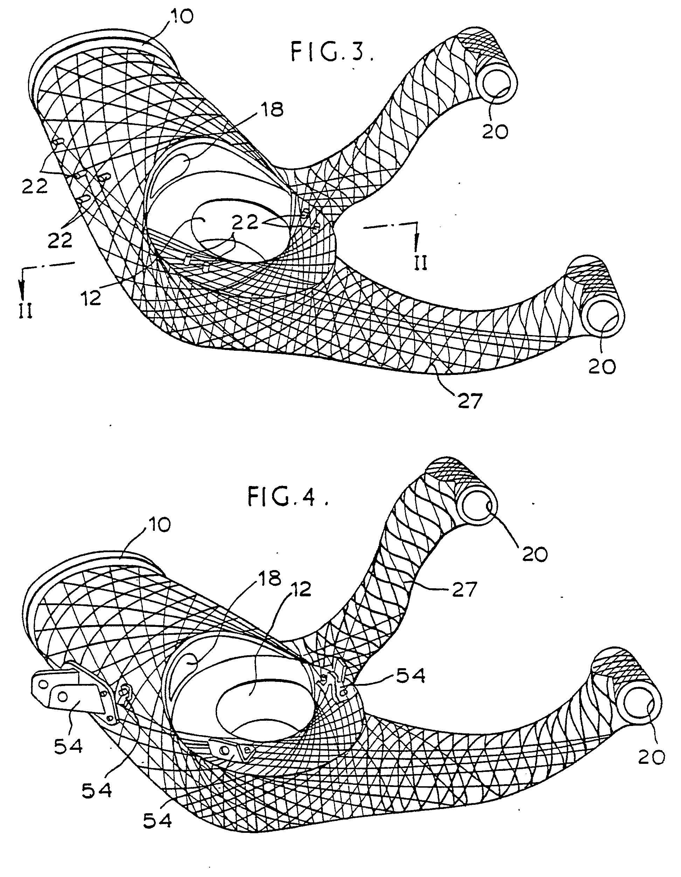

Winding of the structure takes place to produce the wishbone shown in Figure 3. A cross section through this wishbone will appear as shown in Figure 2, with the mandrel 5 covered by a wound layer 34.

Winding will be performed along some or all of helical, longitudinal and circumferential geodesic paths. Longitudinal windings give bending stiffness and helical windings give both bending and torsional stiffness. Circumferential windings improve coverage and diametral stiffness.

The oblique cone 32 is wound with helical and longitudinal windings. The cylindrical portion 30 is wound with a combination of helical, longitudinal and circumferential windings, especially longitudinal windings to resist the force induced by the coil suspension spring 11. The arms 14 and 16 are wound with both circumferential and helical windings. Longitudinal windings may also be needed. The pivot bushes 20 provide a natural turn-round for filament paths.

To permit access for the drive-shaft and coil spring, an unwound portion exists around the spring well 12. This is a naturally wound opening (i.e. the filaments are continuous around the opening) as opposed to a cut opening which could seriously weaken the structure.

Once complete coverage is obtained, it is then possible to repeat the coverage or to reinforce the structure locally in highly stressed areas with extra filaments.

A typical stud plate 24 is shown in Figures 11 and 12. The plate has a base 50 with a bevelled perimeter. A stud 22 is upstanding from this base. In the mould, this base and stud are lightly affixed to the mould wall, so that the base 50 projects into the mould cavity. When foaming takes place, the foam flows around the tapered base and thus locks the base into the foam structure. When the mould is opened, the bond between the base and stud and the mould wall is broken and the stud plate remains fixed in the relatively high density material which forms the external skin of the mandrel.

The filament wound skin 34 is then applied to the mandrel, over the base 50 and around the root of the stud 22. If necessary, additional reinforcing patches 52 may be included in the filament wound structure.

Once the filament wound structure 34 has cured, any required fitting 54 can be bolted on using a nut 56 on the projecting threaded stud 22. Examples of fitted brackets 54 are shown in place in Figure 4.

The mandrel 5 remains as part of the wishbone, and contributes to its strength.

**Claims**

1. A method of manufacturing an article by using a filament winding technique, and where the article includes fittings mounted on its surface by which it can be detachably connected to other components, in which method a mandrel (5) is formed on which filaments (27) can be wound, the fittings are secured to the mandrel skin with the fittings projecting, and resin coated or impregnated filaments are wound onto the mandrel and over the fittings so that, when the resin has set, it secures the fittings in place, with the mandrel remaining part of the article after winding has been completed, characterized in that the article is of complex shape and has no single axis of symmetry and that the fittings, which are to be mounted at irregularly spaced positions on the surface of the article, have generally planar mounting plates secured to the mandrel skin, with the filaments being wound over the mounting plates to secure the fittings.

2. A method as claimed in Claim 1, including the steps of providing a mould having a cavity of a complex shape corresponding to that of the article to be manufactured, positioning the fittings in the mould cavity, introducing a foam-forming material into the cavity to form the mandrel and to flow around the mounting plates of the fittings, allowing the material to set in the mould cavity and removing the mandrel from the cavity with the fittings embedded in the mandrel skin.

3. A method as claimed in Claim 1 or Claim 2, wherein the mandrel (5) is made as a rigid foamed structure.

4. A method as claimed in any preceding claim, wherein the mandrel (5) is formed as a structural foam.

5. A method as claimed in Claim 3, wherein the foam is a thermosetting foam.

6. A method as claimed in Claim 3, wherein the foam is a thermoplastic foam.

7. A method as claimed in Claim 5, wherein the foam is a polyurethane foam.

8. A method as claimed in Claim 6, wherein the foam is a polyethylene foam.

9. A method as claimed in Claim 6, wherein the foam is a polypropylene foam.

10. A method as claimed in any preceding claim, wherein the mandrel is formed by reaction injection moulding.

11. A method as claimed in Claim 10, wherein the mounting plates (50) are metal and are moulded in to the mandrel skin.

12. A method as claimed in Claim 11, wherein each mounting plate (50) has a tapered portion, and the tapered portions are embedded in the material of the mandrel.

13. A method as claimed in Claim 5 or Claim 7, wherein the mould for the mandrel is made in two halves, plus a side mould piece.

14. A method as claimed in any one of Claims 6, 8 or 9 wherein two moulds are used to make the mandrel in two halves which are secured together after moulding to make a hollow shell.

15. A method as claimed in any preceding claim, wherein the filaments are wound on geodesic or near-geodesic paths on the mandrel surface.

16. A method as claimed in Claim 15, wherein the mandrel shape is approximated by a series of regular shapes (30,32), and geodesic paths are determined on these regular shapes.

**Patentansprüche**

1. Verfahren zur Herstellung eines Artikels unter Anwendung der Wickeltechnik, wobei dieser auf seiner Oberfläche angebrachte Anschlussstücke zur lösbaren Verbindung mit anderen Bauteilen einschliesst, bei dem man einen Dorn (5) bildet, auf den Fäden (27) aufgewickelt werden können, die Anschlussstücke vorstehend auf der Dornhaut befestigt und harzbeschichtete oder -imprägnierte Fäden so auf den Dorn und über die Anschlussstücke aufwickelt, dass das Harz nach seinem Erhärten die Anschlussstücke in ihrer Stellung festhält, wobei der Dorn nach beendetem Aufwickeln als Teil des Artikels verbleibt, dadurch gekennzeichnet, dass der Artikel eine komplexe Gestalt und keine Einzelsymmetrieachse aufweist und dass die in unregelmässigen Abständen auf der Oberfläche des Artikels anzubringenden Anschlussstücke allgemein ebene, an der Dornhaut befestigte Anbauplatten aufweisen, wobei die Fäden über die zur Befestigung der Anschlussstücke bestimmten Anbauplatten aufgewickelt werden.

2. Verfahren nach Anspruch 1, einschliesslich der Stufen, dass man ein Werkzeug mit einem Hohlraum vorsieht, der eine komplizierte, derjenigen des herzustellenden Artikels entsprechende Gestalt aufweist, die Anschlussstücke im Werkzeughohlraum in Stellung bringt, zur Bildung des Dorns und zum Umfliessen der Anbauplatten der Anschlussstücke in den Hohlraum ein schaumbildendes Material einbringt, das Material im Werkzeughohlraum härten lässt und den Dorn mit den in der Dornhaut eingebetteten Anschlussstücken aus dem Hohlraum entnimmt.

3. Verfahren nach Anspruch 1 oder 2, worin der Dorn (5) als Hartschaumgebilde hergestellt wird.

4. Verfahren nach einem der vorhergehenden Ansprüche, worin der Dorn (5) als Strukturschaum gebildet wird.

5. Verfahren nach Anspruch 3, worin der Schaum ein duroplastischer Schaum ist.

6. Verfahren nach Anspruch 3, worin der Schaum ein thermoplastischer Schaum ist.

7. Verfahren nach Anspruch 5, worin der Schaum ein Polyurethanschaum ist.

8. Verfahren nach Anspruch 6, worin der Schaum ein Polyäthylenschaum ist.

9. Verfahren nach Anspruch 6, worin der Schaum ein Polypropylenschaum ist.

10. Verfahren nach einem der vorhergehenden Ansprüche, worin der Dorn durch Reaktionsspritzgiessen gebildet wird.

11. Verfahren nach Anspruch 10, worin die Anbauplatten (50) aus Metall bestehen und in die Dornhaut eingeformt werden.

12. Verfahren nach Anspruch 11, worin die Anbauplatten (50) jeweils einen verjüngten Teil aufweisen und die verjüngten Teile im Dornmaterial eingebettet sind.

13. Verfahren nach Anspruch 5 oder 7, worin das Werkzeug für den Dorn aus zwei Hälften zusammen mit einem Werkzeugseitenstück hergestellt wird.

14. Verfahren nach einem der Ansprüche 6, 8 oder 9, worin zwei Werkzeuge zur Herstellung des Dorns in zwei Hälften verwendet werden, die nach dem Formen zu einer hohlen Schale zusammengefügt werden.

15. Verfahren nach einem der vorhergehenden Ansprüche, worin die Fäden auf geodätischen oder nahezu geodätischen Linien auf die Dornoberfläche aufgewickelt werden.

16. Verfahren nach Anspruch 15, worin die Dorngestalt durch eine Reihe regelmässiger Gestalten (30, 32) angenähert wird und geodätische Linien auf diesen regelmässigen Gestalten bestimmt werden.

## Revendications

1. Procédé de fabrication d'un objet en utilisant une technique d'enroulement de filaments, cet objet comprenant des éléments de fixation montés sur sa surface et à l'aide desquels il peut être relié d'une manière amovible à d'autres composants, procédé selon lequel on forme un mandrin (5) sur lequel on peut enrouler des filaments (27), on fixe les éléments de fixation sur la peau du mandrin avec ces éléments en saillie et on enroule des filaments revêtus ou imprégnés de résine par-dessus le mandrin et par-dessus les éléments de fixation de façon que, lorsque la résine a durci, elle immobilise en position ces éléments de fixation, le mandrin demeurant une partie de l'objet une fois l'enroulement achevé, caractérisé en ce que l'objet est d'une forme complexe et ne présente pas d'axe unique de symétrie et en ce que les éléments de fixation, qui doivent être montés sur la surface de cet objet en des emplacements espacés de manière irrégulière, comportent des plaques de montage sensiblement planes qui sont fixées sur la peau du mandrin, les filaments étant enroulés par-dessus ces plaques de montage afin d'immobiliser les éléments de fixation.

2. Procédé tel que revendiqué dans la revendication 1, consistant à prévoir un moule présentant une cavité d'une forme complexe correspondant à celle de l'objet à fabriquer, à mettre en place les pièces de fixation dans la cavité de moule, à introduire dans cette cavité une matière formant une mousse de façon qu'elle forme le mandrin et qu'elle s'écoule autour des plaques de montage des pièces de fixation, à laisser la matière durcir dans la cavité de moule et à extraire le mandrin de la cavité avec les pièces de fixation noyées dans la peau du mandrin.

3. Procédé tel que revendiqué dans la revendication 1 ou la revendication 2, selon lequel le mandrin (5) est réalisé sous forme d'une structure de mousse expansée rigide.

4. Procédé tel que revendiqué dans n'importe quelle revendication précédente, selon lequel le mandrin (5) est constitué d'une mousse structurelle.

5. Procédé tel que revendiqué dans la revendication 3, selon lequel la mousse est une mousse thermodurcissable.

6. Procédé tel que revendiqué dans la revendication 3, selon lequel la mousse est une mousse thermoplastique.

7. Procédé tel que revendiqué dans la revendication 5, selon lequel la mousse est une mousse de polyuréthane.

8. Procédé tel que revendiqué dans la revendication 6, selon lequel la mousse est une mousse de polyéthylène.

9. Procédé tel que revendiqué dans la revendication 6, selon lequel la mousse est une mousse de polypropylène.

10. Procédé tel que revendiqué dans n'importe qu'elle revendication précédente, selon lequel le mandrin est réalisé par réaction et moulage par injection.

11. Procédé tel que revendiqué dans la revendication 10, selon lequel les plaques de montage (50) sont en métal et sont mises en place au moulage dans la peau du mandrin.

12. Procédé tel que revendiqué dans la revendication 1, selon lequel chaque plaque de montage (50) présente une partie et les parties sont noyées dans le matériau du mandrin.

13. Procédé tel que revendiqué dans la revendication 5 ou la revendication 7, selon lequel le moule prévu pour le mandrin est réalisé en deux moitiés, plus un élément latéral de moule.

14. Procédé tel que revendiqué dans l'une quelconque des revendications 6, 8 ou 9, selon lequel on utilise deux moules pour réaliser le mandrin en deux moitiés qui sont fixées ensemble après moulage de façon à réaliser une coquille creuse.

15. Procédé tel que revendiqué dans n'importe quelle revendication précédente, selon lequel on enroule les filaments sur des trajets orthodromiques ou presque orthodromiques situés sur la surface du mandrin.

16. Procédé tel que revendiqué dans la revendication 15, selon lequel on détermine la forme du mandrin par approximation à l'aide d'une série de formes régulières (30, 32) et on détermine les trajets orthodromiques sur ces formes régulières.

FIG. 1 .

FIG. 2 .

FIG.3.

FIG.4.

FIG. 5.

FIG. 6.

FIG. 7.

FIG. 8.

FIG.9

FIG.IO.

FIG.II.

FIG.I2.